# EUROPÄISCHE PATENTSCHRIFT

(11) **EP 1 108 630 B1**
(45) Veröffentlichungstag und Bekanntmachung des Hinweises auf die Patenterteilung: **05.07.2006**
(21) Anmeldenummer: 00126811.9
(22) Anmeldetag: 07.12.2000
(51) Int. Cl.: B60R 25/00, B60R 25/04

(54) **Vorrichtung zur Aktivierung und/oder Deaktivierung einer Sicherheitseinrichtung**
Activation and/or deactivation device for a security system
Dispositif d'activation et/ou désactivation pour un système de sécurité

(30) Priorität: 17.02.2000 DE 10007288; 16.12.1999 DE 19960781
(43) Veröffentlichungstag der Anmeldung: 20.06.2001
(73) Patentinhaber: SIEMENS AKTIENGESELLSCHAFT, 80333 München (DE)
(72) Erfinder: Lässle, Hans-Peter, 61250 Usingen (DE); Schmid, Dietmar, 65606 Villmar (DE)

(56) Entgegenhaltungen:
- EP-A- 0 983 916
- DE-U- 9 304 520
- HUTTON B: "CODE CATCHERS CAUGHT OUT. OVERCOMMING THE SECURITY RISKS POSED BY REMOTE KEYLESS ENTRY" NEW ELECTRONICS, INTERNATIONAL THOMSON PUBLISHING, LONDON, GB, Bd. 30, Nr. 13, 8. Juli 1997 (1997-07-08), Seite 41 XP000727683 ISSN: 0047-9624

## Beschreibung

Die Erfindung betrifft eine Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum drahtlosen Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgebbar ist und die Sendeeinheit und die Empfängervorrichtung hinsichtlich der aktuellen codierten Information weiterschaltbar sind.

Eine Vorrichtung gemäß dem Oberbegriff von Anspruch 1 ist aus der DE 9304520 U bekannt.

Bekannte Vorrichtungen zur Aktivierung und/oder Deaktivierung eines Schließsystems in einem Kraftfahrzeug besitzen einen tragbaren Sender, welcher nach Aufforderung eine codierte Information an eine Empfängereinrichtung aussendet, die fest im Kraftfahrzeug installiert ist. Die Empfängereinrichtung vergleicht die übertragene codierte Information mit einer in ihr erzeugten vorgegebenen Information. Bei Übereinstimmung beider Informationen wird das Schließsystem durch die Empfängereinrichtung angesteuert.

Um die Sicherheitseinrichtung beispielsweise bei Ausfall der Batterie des Senders weiterhin betätigen zu können, ist die Empfängereinrichtung mit einem Schließzylinder verbunden, welcher mit Hilfe eines Schlüssels mechanisch betätigt werden kann, wodurch die Sicherheitseinrichtung ebenfalls aktiviert bzw. deaktiviert wird.

Da im Normalfall nur die Fernbedienung zur Ansteuerung des Schließsystems genutzt wird, muss sichergestellt werden, dass nur ganz bestimmte Sender eine Zentralverriegelungsanlage ent- bzw. verriegeln können. Deshalb sind die Übertragungsprotokolle mit einer festen Zuordnung versehen, welche aus einem Festcode und einem Wechselcode besteht.

Zur Berechnung der jeweils nächsten Wechselcodewerte wird im Sender und im Empfänger der gleiche Algorithmus verwendet. Dabei besitzt der Empfänger zur Ent- bzw. Verriegelung einen sogenannten Fangbereich, welcher immer mehrere in der Zukunft liegende codierte Informationen als gültig zuläßt. Der Wechselcode wird im Sender durch Anforderung geändert, im Empfänger hingegen bei Empfang einer gültigen Information mit der des Senders gleichgesetzt. Somit kann es vorkommen, daß, wenn mehrere codierte Informationen des Senders den Empfänger nicht erreichen, eine zulässige codierte Information außerhalb des Fangbereiches des Empfängers liegt und somit vom Empfänger nicht erkannt wird.

Insbesondere bei der Verwendung von Funkfernbedienungen, wo codierte Informationen über weite Entfernungen mit Hilfe eines Funksignals transportiert werden, kann durch Störung innerhalb der Übertragungsstrecke der Empfang der vom Sender ausgesandten codierten Information durch den Empfänger beeinträchtigt oder ganz unterbrochen sein. Eine solche Störung kann bewußt erzeugt werden, um die vom Sender ausgesandten codierten Informationen aufzuzeichnen und zum unbefugten Öffnen des Kraftfahrzeuges zu verwenden.

Betätigt ein Nutzer die Sendeeinheit mehrfach, so kann ihm eine ordnungsgemäße Funktion der Sicherheitseinrichtung dadurch vorgetäuscht werden, dass eines der abgehörten Sendertelegramme in einer Abhörpause von der Abhöreinrichtung zur Empfängereinrichtung gesandt wird und dort die erwartetete Reaktion auslöst, obwohl die Sendenachricht nicht vom berechtigten Sender ausgesandt wurde. Der Nutzer ist somit in dem Glauben, dass sein Fahrzeug ordnungsgemäß verschlossen ist. Während dessen können Unbefugte mit Hilfe der anderen abgehörten Sendernachrichten, die jünger als das von der Abhöreinrichtung ausgesandte Telegramm sind, einen Zugang zu dem Kraftfahrzeug erlangen.

Der Erfindung liegt somit die Aufgabe zugrunde, eine Vorrichtung zur Aktivierung und/oder Deaktivierung einer Sicherheitseinrichtung anzugeben, bei welcher ein unbefugtes Deaktivieren der Einrichtung sicher verhindert wird.

Erfindungsgemäß wird die Aufgabe dadurch gelöst, dass eine n-fache Weiterschaltung in der Sendeeinheit und in der Empfängervorrichtung nach einem vorgegebenen Zeitraum selbsttätig erfolgt, wobei der vorgegebene Zeitraum nur unwesentlich größer ist, als die Laufzeit des die codierte Information tragenden Signals von der Sendeeinheit zur Empfängervorrichtung bei einer maximalen Reichweite der Empfängervorrichtung.

Durch die sprunghafte Weiterschaltung der gültigen codierten Information, wird sichergestellt, das alle abgehörten Signale sicher in der Vergangenheit liegen und von der Empfängervorrichtung als ungültig erkannt werden. Dadurch sind schon kurz nach dem oben beschriebenen Abhörversuch die im Abhörgerät gespeicherten Codefolgen aus Sicht der Empfängervorrichtung vergangene Wechselcodefolgen, die nicht mehr zum Öffnen des Fahrzeuges verwendet werden können. Der vorgegebene Zeitraum wird dabei so eingestellt, dass sich der Bediener noch in der Nähe des Fahrzeuges befindet.

Vorteilhafterweise wird der vorgegebene Zeitraum in der Empfängereinrichtung nach dem Empfang einer gültigen Information und in der Sendeeinheit nach Beendigung der Aussendung einer codierten Information gestartet.

Um zu verhindern, dass nach einer bestimmten Zeit der Fangbereich der Empfängervorrichtung durch die codierte Information der tragbaren Sendeeinheit überschritten wird, werden der Codegenerator der tragbaren Sendeeinheit und der Codegenerator der Empfängervorrichtung um die gleiche Anzahl von Schritten weitergeschaltet.

Vorteilhafterweise ist die Empfängervorrichtung mit einer mechanischen Einrichtung verbunden, welche mittels eines Schlüssels betätigbar ist, wobei nach einer mechanischen Aktivierung der Sicherheitseinrichtung die Empfängervorrichtung für den Empfang und/oder die Auswertung der codierten Information und/oder die Ausgabe des Ansteuersignals an die Sicherheitseinrichtung gesperrt ist, wobei die Blockierung nach der mechanischen Deaktivierung der Sicherheitseinrichtung aufgehoben wird.

Dies hat den Vorteil, dass, wenn der Nutzer nach mehrfachem Betätigen des Senders feststellt, dass der Empfänger auf die ausgesandten Sendersignale nicht reagiert und die gewünschte Aktion nicht ausgeführt werden kann, er eine Deaktivierung der Sicherungeinrichtung auf dem herkömmlichen Weg ausführen kann, indem er den Schlüssel in den Schließzylinder einführen und die Sicherheitseinrichtung ent- bzw. verriegelt. Da aber gleichzeitig mit dieser mechanischen Verriegelung die Funkfernbedienung außer Funktion gesetzt wird, wird somit auch zuverlässig verhindert, dass mittels abgehörtem und noch nicht vom Empfänger registrierten codierten Informationen die Sicherheitseinrichtung deaktiviert werden kann. Erst nach einer mechanische Deaktivierung der Sicherheitseinrichtung arbeitet die Funkfernbedienung wieder in der gewohnten Weise.

Mittels einer, unmittelbar nach der mechanischen Deaktivierung der Sicherheitseinrichtung vom Sender zum Empfänger übertragenen codierten Information werden alle eventuell zuvor aufgezeichneten codierten Informationen in den Bereich der Vergangenheit versetzt, da im Empfänger bei Empfang einer gültigen Information vom Sender diese mit der im Empfänger vorhandenen gleichgesetzt wird. D. h. sie liegen außerhalb des Fangbereiches des Empfängers, so dass keine Aktionen mit Hilfe dieser abgehörten codierten Informationen ausgelöst werden können.

Besonders schnell und zuverlässig erfolgt dies, wenn die Empfängervorrichtung nach Feststellung der mechanischen Deaktivierung der Sicherheitseinrichtung ein Reizsignal zur Aussendung der codierten Information an die tragbare Sendeeinheit sendet.

Vorteilhafterweise sind in der tragbaren Sendeeinheit und in der Empfängervorrichtung jeweils ein Codegenerator angeordnet, wobei der erste Codegenerator der tragbaren Sendeeinheit die zu übertragende codierte Information und der zweite Codegenerator der Empfängervorrichtung die vorgegebene codierte Information erzeugt, wobei beide Codegeneratoren nach dem gleichen Algorithmus arbeiten.

Dabei können jeweils eine oder mehrere voneinander unabhängige Zufallszahlen als Code dienen, die nach bestimmten Rechenregeln bearbeitet und im Empfänger miteinander verglichen werden.

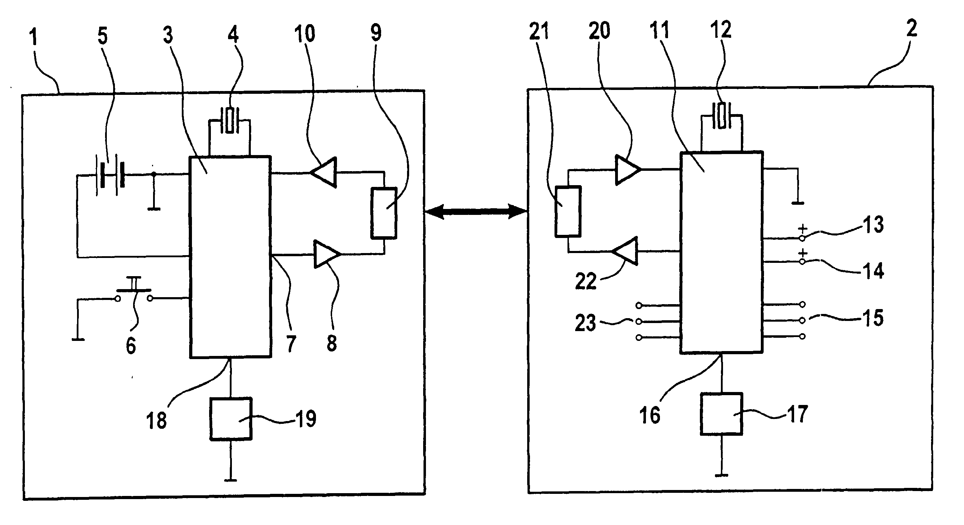

Die Erfindung läßt zahlreiche Ausführungsformen zu. Eine davon soll anhand der in der Zeichnung dargestellten Figur erläutert werden.

Bei einer Sicherheitseinrichtung im Kraftfahrzeug, beispielsweise einer Zentralverriegelungseinrichtung umfaßt eine tragbare Sendeeinheit 1 einen Mikrocomputer 3, welchem ein Schwingquarz 4 zur Takterzeugung zugeordnet ist.

Zur Stromversorgung dient eine Batterie 5, welche zur Erzielung einer geringen Baugröße der Vorrichtung als Knopfzelle ausgebildet ist. Ein Tastschalter 6 dient zum Einschalten der Sendevorrichtung 1. Darüber hinaus ist der Mikrocomputer 3 mit einem Zufallsgenerator 19 verbunden.

Der Ausgang 7 des Mikrocomputers 3 führt zur Aussendung von Funksignalen über einen Verstärker 8 zu einer Antenne 9. Zum Empfang von Funksignalen ist die Antenne 9 über einen weiteren Verstärker 10 mit dem Mikrocomputer 3 verbunden.

Die Empfängervorrichtung 2 weist ebenfalls einen Mikrocomputer 11 mit einem Schwingquarz 12 auf. Über den Anschluß 13 ist der Mikrocomputer 11 an die Stromquelle des Kraftfahrzeuges (Klemme 13) angeschlossen. Der Anschluß 14 ist mit dem Zündschalter (Klemme 15) des Kraftfahrzeuges verbunden, so dass bei jedem Startvorgang eine Ansteuerung des Mikrocomputers 11 erfolgt. Die Eingänge 15 des Mikrocomputers 11 sind jeweils einer in einer Tür des Kraftfahrzeuges angeordneten Schließvorrichtung zugeordnet und können durch mechanische Betätigung mittels eines Schlüssels zu einer Ansteuerung des Mikrocomputers 11 genutzt werden, wenn die Normalfunktion der Steuervorrichtung gestört ist. An einem weiteren Eingang 16 des Mikrocomputers 11 ist ebenfalls ein eine Zufallsimpulsfolge erzeugender Generator 17 angeschlossen. Über einen Verstärker 20 ist eine Sende-/Empfangsantenne 21 an den Mikrocomputer 11 angeschlossen. Jeder der drei Anschlüsse 23 des Mikrocomputers 11 führt zu einer Schließvorrichtung der Zentralverriegelung des Kraftfahrzeuges und überträgt das vom Mikrocomputer 11 abgegebene Ansteuersignal.

Die Bildung der codierten Information erfolgt mit Hilfe eines Festcodes und eines Wechselcodes. Der Wechselcode wird mit Hilfe der von dem Zufallsgenerator 19, 17 generierten Zufallszahl und dem im Mikroprozessor gespeicherten Algorithmus erzeugt. Der Wert des Wechselcodes wird in der tragbaren Sendeeinheit 1 nach einem bestimmten Ereignis weitergeschaltet.

In der Empfängereinrichtung 2 werden die Werte des Wechselcodes in zugelassene und nicht zugelassene unterteilt. Dabei gilt immer, dass die zugelassenen Werte in der Zukunft liegen und die nicht zugelassenen Werte in der Vergangenheit bzw. der Gegenwart. Die Trennlinie dieser Bereiche wird durch den aktuellen Wert des Wechselcodes und den Fangbereich bestimmt, wobei der aktuelle Wert der Gegenwart und der Fangbereich einer vorgegebenen Anzahl von zukünftigen der zu übertragenden codierten Informationen entspricht.

Die Einrichtung arbeitet wie folgt:

Durch Betätigung des Tastschalters 6 erhält der Mikrocomputer 3 der tragbaren Sendeeinheit 1 den Befehl, den Algorithmus zur Erzeugung einer codierten Information zu starten, wobei eine Zufallszahl vom Generator 19 bereit gestellt wird. Die so erzeugte codierte Information wird über die Antenne 9 an den im Kraftfahrzeug befindlichen Empfänger 2 ausgesandt, wo sie durch die Antenne 21 empfangen und an den Mikroprozessor 11 weitergeleitet wird. Nach Beendigung der Aussendung der codierten Information wartet der Mikroprozessor 3 einen vorgegebenen Zeitraum bevor er den Wechselcode der Sendeeinheit 1 um n Schritte weiterschaltet.

Gleichzeitig wird im Mikroprozessor 11 die mit Hilfe des Zufallszahlgenerators 17 erzeugte vorgegebene codierte Information mit der empfangenen codierten Information verglichen. Bei Übereinstimmung beider Codierungen gibt der Mikroprozessor 11 über die Anschlüsse 23 ein Ansteuersignal an die Türschlösser der Zentralverriegelungsanlage des Kraftfahrzeuges zum Verschließen der Türen.

Auch der Mikroprozessor 11 der Empfängereinrichtung 2 schaltet nach Empfang einer gültigen Information nach Ablauf der vorgegebenen Zeitdauer den Fangbereich ebenfalls um n Werte weiter. Bei der Verwendung von Funksignalen liegt die vorgegebene Zeitdauer im Sekundenbereich. Die Zeitdauer ist aber so kurz gewählt, dass codierte Informationen, die nicht auf direktem Wege von der Sendeeinheit zum Empfänger gelangen, aus Sicht des Empfängers immer in der Vergangenheit liegen, wenn der Bediener sich vom Fahrzeug entfernt hat.

Sollte nun der Empfang des Empfängers 2 gestört sein und der Nutzer der tragbaren Sendeeinheit 1 trotz mehrfacher Betätigung des Tasters 6 keine Reaktion am Kraftfahrzeug erkennen, wird er mit Hilfe eines nicht dargestellten Schlüssels die Schlösser der Zentralverriegelungsanlage aktivieren und dadurch das Fahrzeug verschließen. Dies detektiert der Mikroprozesser 11 des Empfängers 2 über die Anschlüsse 15. Als Aktion auf diese mechanische Verriegelung des Kraftfahrzeuges sperrt der Mikroprozessor 11 die Auswertung der über die Antenne 21 nach der Verriegelung eintreffenden Signale, so dass infolge von drahtlos übertragenen Signalen an die Sicherheitseinrichtung über die Anschlüsse 23 keine Ansteuersignale ausgegeben werden.

Soll nun die Funkfernbedienung wieder aktiviert werden, wird wieder mit dem Schlüssel der Schloßnußschalter und somit die Fahrzeugtür entriegelt, was der Mikroprozessor 11 über die Anschlüsse 15 erkennt. Dabei wird beim gleichzeitigen Entriegeln der Türen die Empfängervorrichtung aktiv gegenüber den eintreffenden codierten Informationen geschaltet.

Um zu verhindern, dass abgehörte codierte Informationen, die noch nicht vom Empfänger ausgewertet wurden, zu einer Ansteuerung der Zentralverriegelungsanlage führen, wird sofort nach der mechanischen Entriegelung eine codierte Information vom Sendeeinheit 1 zur Empfängervorrichtung 2 gesandt. Dies bewirkt, dass der Algorithmus in der Sendeeinheit 1 und der Empfängervorrichtung 2 weitergeschaltet werden. Die unmittelbare Aussendung einer aktuellen codierten Information erfolgt durch die tragbare Sendeeinheit 1 nach Empfang eines Reizsignales, welches die Empfängervorrichtung 2 aufgrund der Entriegelung der Fahrzeugtüren aussendet.

Alternativ kann das System aber auch so konzipiert sein, dass nach einer mechanischen Verriegelung der Funkempfang erneut gesperrt ist, während bei einer Verriegelung über Funk die eventuell aufgezeichneten Codes ungültig werden.

Werden nun Funksignale vom der Empfängervorrichtung 2 empfangen, die vor der Blockierung der Empfängervorrichtung 2 durch die Sendeeinheit 1 abgegeben wurden, so liegen diese nicht mehr im Fangbereich der Empfängervorrichtung 2 und können somit auch nicht zur Aktivierung bzw. Deaktivierung der Schließvorrichtung führen.

## Patentansprüche

1. Vorrichtung zur Aktivierung und/oder Deaktivierung einer Sicherheitseinrichtung, insbesondere einer Zugangseinrichtung für ein Kraftfahrzeug, mit einer tragbaren Sendeeinheit zum drahtlosen Senden einer codierten Information, welche von einer Empfängervorrichtung empfangen und mit einer vorgegebenen codierten Information verglichen wird, wobei von der Empfängervorrichtung im Fall der Übereinstimmung beider Informationen ein Ansteuersignal an die Sicherheitseinrichtung abgegeben wird, wobei Sendeeinheit und die Empfängervorrichtung hinsichtlich der aktullen codierten Informationen weitergeschaltet werden **dadurch gekennzeichnet, dass** eine n-fache Weiterschaltung in der Sendeeinheit und in der Empfängervorrichtung nach einem vorgegebenen Zeitraum selbsttätig erfolgt, wobei der vorgegebene Zeitraum nur unwesentlich größer ist, als die Laufzeit des die codierte Information tragenden Signals von der Sendeeinheit zur Empfängervorrichtung bei einer maximalen Reichweite der Empfängervorrichtung.

2. Vorrichtung nach Anspruch 1 **dadurch gekennzeichnet, dass** der vorgegebene Zeitraum in der Empfängervorrichtung nach dem Empfang einer gültigen codierten Information gestartet wird.

3. Vorrichtung nach Anspruch 1 oder 2 **dadurch gekennzeichnet, dass** der vorgegebene Zeitraum in der Sendeeinheit nach Ende einer Aussendung einer codierten Information gestartet wird.

4. Vorrichtung nach Anspruch 1, **dadurch gekennzeichnet, dass** der Codegenerator (19) der tragbaren Sendeeinheit (1) und der Codegenerator (17) der Empfängervorrichtung (2) um die gleiche Anzahl von Schritten weitergeschaltet werden.

5. Vorrichtung nach einem der vorhergehenden Ansprüche **dadurch gekennzeichnet, dass** die Empfängervorrichtung mit einer mechanischen Einrichtung verbunden ist, welche mittels eines Schlüssels betätigbar ist, wobei nach einer mechanischen Aktivierung der Sicherheitseinrichtung die Empfängervorrichtung (2) für den Empfang und/oder die Auswertung der übertragenen codierten Information und/oder die Ausgabe des Ansteuersignales gesperrt ist, wobei die Blockierung nach der mechanischen Deaktivierung der Sicherheitseinrichtung aufgehoben wird.

6. Vorrichtung nach Anspruch 4, **dadurch gekennzeichnet, dass** unmittelbar nach der mechanischen Deaktivierung der Sicherheitseinrichtung eine codierte Information von der tragbaren Sendeeinheit (1) zur Empfängereinrichtung (2) übertragen wird.

7. Vorrichtung nach Anspruch 5 **dadurch gekennzeichnet, dass** die Empfängervorrichtung (2) nach Feststellung der mechanischen Deaktivierung der Sicherheitseinrichtung ein Reizsignal zur Aussendung der codierten Information an die tragbare Sendeeinheit (1) sendet.

8. Vorrichtung nach einem der vorhergehenden Ansprüche **dadurch gekennzeichnet, dass** in der tragbaren Sendeeinheit (1) und in der Empfängervorrichtung (2) jeweils ein Codegenerator (19, 17) angeordnet ist, wobei der erste Codegenerator (19) der tragbaren Sendeeinheit (1) die zu übertragende codierte Information und der zweite Codegenerator (17) der Empfängervorrichtung (2) die vorgegebene codierte Information erzeugt, wobei beide Codegeneratoren (19, 17) nach dem gleichen Algorithmus arbeiten.

## Claims

1. Apparatus for activating and/or deactivating a security device, particularly an entry device for a motor vehicle, having a portable transmitter unit for wirelessly transmitting a coded information item which is received by a receiver apparatus and is compared with a prescribed coded information item, the receiver apparatus outputting an actuation signal to the security device if the two information items match, the transmitter unit and the receiver apparatus being advanced in terms of the current coded information items, **characterized in that** the transmitter unit and the receiver apparatus are automatically advanced n times after a prescribed interval, the prescribed interval being only insubstantially longer than the delay time for the signal carrying the coded information item from the transmitter unit to the receiver apparatus at a maximum range for the receiver apparatus.

2. Apparatus according to Claim 1, **characterized in that** the prescribed interval is started in the receiver apparatus after a valid coded information item has been received.

3. Apparatus according to Claim 1 or 2, **characterized in that** the prescribed interval is started in the transmitter unit after the transmission of a coded information item has ended.

4. Apparatus according to Claim 1, **characterized in that** the code generator (19) in the portable transmitter unit (1) and the code generator (17) in the receiver apparatus (2) are advanced by the same number of steps.

5. Apparatus according to one of the preceding claims, **characterized in that** the receiver apparatus is connected to a mechanical device which can be operated using a key, the receiver apparatus (2) being disabled for the reception and/or evaluation of the transmitted coded information item and/or for the output of the actuation signal after the security device has been mechanically activated, the block being lifted after the security device has been mechanically deactivated.

6. Apparatus according to Claim 4, **characterized in that** a coded information item is transmitted from the portable transmitter unit (1) to the receiver device (2) directly after the security device has been mechanically deactivated.

7. Apparatus according to Claim 5, **characterized in that** the receiver apparatus (2), having established that the security device has been mechanically deactivated, sends a stimulus signal to the portable transmitter unit (1) for transmission of the coded information item.

8. Apparatus according to one of the preceding claims, **characterized in that** the portable transmitter unit (1) and the receiver apparatus (2) each contain a code generator (19, 17), the first code generator (19) in the portable transmitter unit (1) generating the coded information item which is to be transmitted, and the second code generator (17) in the receiver apparatus (2) generating the prescribed coded information item, both code generators (19, 17) operating on the basis of the same algorithm.

## Revendications

1. Dispositif permettant d'activer et/ou de désactiver un système de sécurité, notamment un système d'accès destiné à un véhicule automobile, comportant une unité émettrice mobile permettant d'émettre par sans-fil une information codée, laquelle est reçue par un dispositif récepteur et comparée à une information codée donnée, où le dispositif récepteur, dans le cas où les deux informations concordent, délivre un signal de commande au système de sécurité et où l'information codée actuelle est substituée dans l'unité émettrice et dans le dispositif récepteur, **caractérisé en ce que** une substitution répétée n fois est effectuée automatiquement dans l'unité émettrice et dans le dispositif récepteur après une période de temps donnée, la période de temps donnée étant seulement légèrement plus longue que le temps de propagation du signal porteur de l'information codée entre l'unité émettrice et le dispositif récepteur dans le cas de la portée maximum du dispositif récepteur.

2. Dispositif selon la revendication 1 **caractérisé par le fait que** la période de temps donnée commence, dans le dispositif récepteur, après la réception d'une information codée en cours de validité.

3. Dispositif selon la revendication 1 ou 2 **caractérisé par le fait que** la période de temps donnée commence, dans l'unité émettrice, après la fin de l'émission d'une information codée.

4. Dispositif selon la revendication 1 **caractérisé par le fait que** le générateur de codes (19) de l'unité émettrice mobile (1) et le générateur de codes (17) du dispositif récepteur (2) sont avancés du même nombre de pas.

5. Dispositif selon l'une des revendications précédentes **caractérisé par le fait que** le dispositif récepteur est relié à un dispositif mécanique pouvant être actionné au moyen d'une clef, le dispositif récepteur (2) étant, après une activation mécanique du système de sécurité, bloqué pour la réception et/ou l'évaluation de l'information codée transmise et/ou l'émission du signal de commande, le blocage étant supprimé après la désactivation mécanique du système de sécurité.

6. Dispositif selon la revendication 4 **caractérisé par le fait que**, immédiatement après la désactivation mécanique du système de sécurité, une information codée est transmise par l'unité émettrice mobile (1) au dispositif récepteur (2).

7. Dispositif selon la revendication 5 **caractérisé par le fait que** le dispositif récepteur (2), après le constat de la désactivation mécanique du système de sécurité, envoie, à l'unité émettrice mobile (1), un signal d'excitation provoquant l'émission de l'information codée.

8. Dispositif selon l'une des revendications précédentes **caractérisé par le fait qu'**un générateur de codes (19, 17) est disposé dans l'unité émettrice mobile (1) et dans le dispositif récepteur (2), le premier générateur de codes (19) de l'unité émettrice mobile (1) produisant l'information codée à transmettre et le deuxième générateur de codes (17) du dispositif récepteur (2) produisant l'information codée donnée et les deux générateurs de codes (19, 17) fonctionnant suivant le même algorithme.
